# EUROPÄISCHE PATENTSCHRIFT

(11) **EP 0 888 922 B1**
(45) Veröffentlichungstag und Bekanntmachung des Hinweises auf die Patenterteilung: **29.10.2003**
(21) Anmeldenummer: 98810485.7
(22) Anmeldetag: 25.05.1998
(51) Int. Cl.: B60L 3/10

(54) **Regelung für einen Antrieb mit einem Asynchronmotor**
Asynchronous motor drive control
Réglage pour l'entraînement d'un moteur asynchrone

(30) Priorität: 30.06.1997 DE 19727507
(43) Veröffentlichungstag der Anmeldung: 07.01.1999
(73) Patentinhaber: Bombardier Transportation GmbH, 13627 Berlin (DE)
(72) Erfinder: Ehrler, Urs, 5412 Gebenstorf (CH); Menth, Stefan, 5400 Baden (CH)
(74) Vertreter: Cohausz & Florack

(56) Entgegenhaltungen:
- EP-A- 0 746 091
- DE-A- 19 530 622
- M. JÄNECKE, R. KREMER, G. STEUERWALD: "Direkte Selbstregelung, ein neuartiges Regelverfahren für Traktionsantriebe im Ersteinsatz bei dieselelektrischen Lokomotiven" EB ELEKTRISCHE BAHNEN, Bd. 89, Nr. 3, März 1991, Seiten 79-87, XP000200273 München DE
- AALTONEN M ET AL: "DIRECT TORQUE CONTROL OF AC MOTOR DRIVES" ABB REVIEW, Nr. 3, 1. Januar 1995, Seiten 19-24, XP000510175

## Beschreibung

### TECHNISCHES GEBIET

Die vorliegende Erfindung bezieht sich auf das Gebiet elektrischen Antriebe. Sie betrifft eine Regelung für einen Antrieb mit einem Asynchronmotor, insbesondere für ein Schienenfahrzeug, welche Regelung einen ersten Regelkreis für die Motorregelung und einen mit dem ersten Regelkreis verbundenen zweiten Regelkreis mit einer Adhäsionsregelung umfasst.

Eine solche Regelung, bei welcher die Motorregelung drehmomentbasiert ist und das Solldrehmoment für die Motorregelung auf der Basis der an der Motorwelle gemessenen Drehzahl von der überlagerten Adhäsionsregelung abgegeben wird, ist aus dem Stand der Technik bekannt.

### STAND DER TECHNIK

Bei elektrisch angetriebenen Lokomotiven mit drehmomentgeregelten Antriebsmotoren in Form von Asynchronmotoren (ASM) kann es zu Schleuderzuständen kommen, bei denen die Antriebsräder unkontrolliert mehr oder weniger stark durchdrehen. Hierdurch ergibt sich ein instabiler Betrieb, bei dem nicht der maximal mögliche Kraftschluss zwischen Rad und Schiene erreicht wird. Zugleich unterliegen die Antriebsräder und die Schienen einem erhöhten Verschleiss.

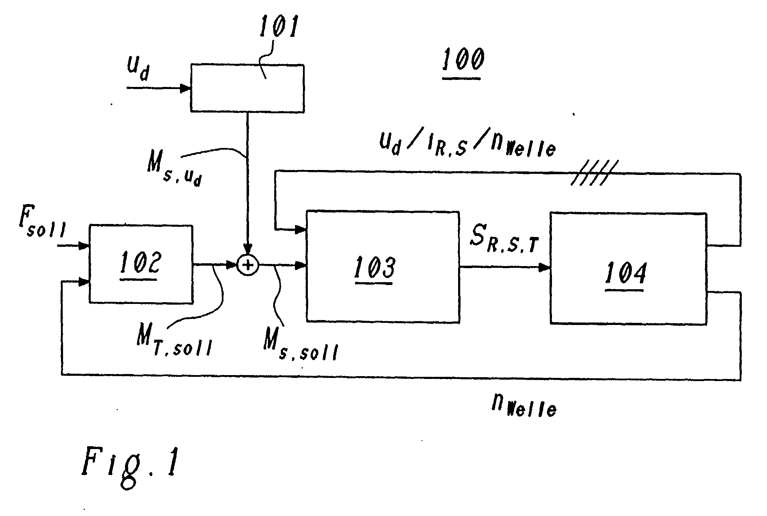

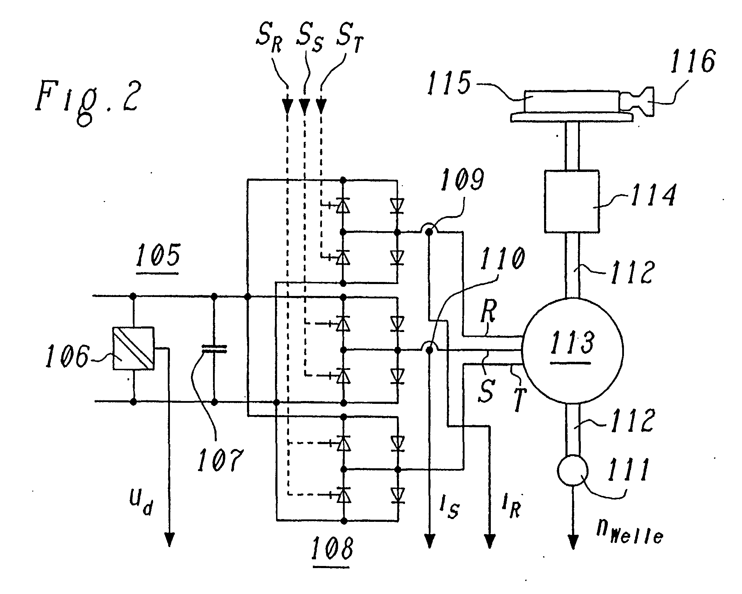

Zur Umgehung des Problems gibt es eine Vielzahl von Lösungsvorschlägen und auch praktisch realisierte Verfahren. Eine beispielhafte bekannte drehmomentbasierte Regelung ist in den Fig. 1 bis 4 wiedergegeben: Das Verfahren basiert auf einer Kaskade von zwei Regelkreisen, die in der schematischen Darstellung der Fig. 1 erkennbar sind. Die Regelung 100 umfasst den Prozess 104, die Motorregelung 103, die Adhäsionsregelung 102, und ggf. eine Zwischenkreis-Antiregelung 101. Der Prozess 104 seinerseits umfasst gemäss Fig. 2 einen eingangsseitig an einen Gleichspannungszwischenkreis 105 mit Zwischenkreiskondensator 107 angeschlossenen, über Schaltbefehle S_{R}, S_{S} und S_{T} gesteuerten Wechselrichter 108, und einen vom Wechselrichter 108 versorgten Asynchronmotor 113, der über eine Motorwelle 112, ein Getriebe 114 und ein Rad 115 die Kraft über eine entsprechende Reibung auf die Schiene 116 zu übertragen versucht. An der Motorwelle 112 ist ein Drehzahlgeber 111 angebracht, der die Drehzahl n_{Welle} der Motorwelle 112 misst und zur weiteren Verarbeitung an die Steuerung abgibt. Weitere für die Steuerung benötigte Eingangsgrössen sind zwei der drei Phasenströme, i_{R} und i_{S}, die über Stromgeber 109 und 110 in den Zuleitungen abgenommen werden, sowie die Zwischenkreisspannung u_{d}, die im Zwischenkreis 105 von einem Spannungsgeber 106 gemessen wird.

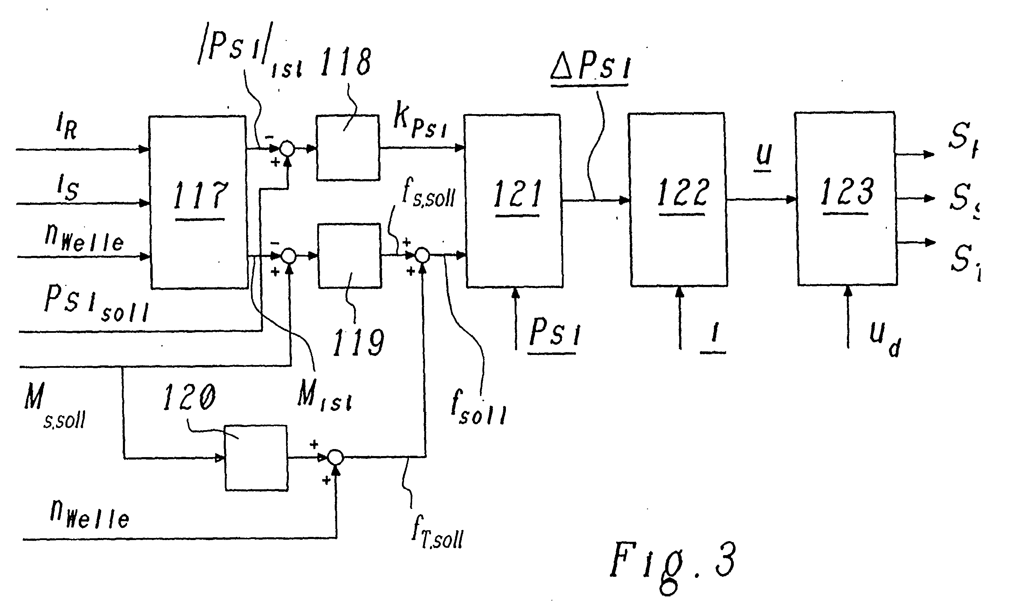

Die aus dem Prozess 104 gewonnenen Grössen u_{d}, i_{R,S} und n_{Welle} werden in die Motorregelung 103 zurückgeführt. Durch Vergleich mit einem vorgegebenen dynamischen Drehmomentsollwert M_{s,soll} werden aus diesen Grössen in der Motorregelung 103 die Steuerbefehle S_{R,S,T} für den Wechselrichter 108 abgeleitet und in den Prozess 104 eingegeben. Die Ableitung erfolgt beispielsweise im Anfahrbereich nach dem in Fig. 3 dargestellten Blockschema der sogenannten Indirekten Selbstregelung ISR, wie sie aus der Druckschrift Elektrische Bahnen 89(1991), Heft 3, S.79-87, bekannt ist: Ein sogenannter Motorbeobachter 117, d.h. eine Rechenschaltung, die Modelle des Wechselrichters 108 und des Asynchronmotors enthält, berechnet aus den genannten Eingangsgrössen einen Ständerflussistwert Psiᵢₛₜ und einen Drehmomentistwert Mᵢₛₜ des Asynchronmotors 113.

Ein Flussregler 118 leitet aus der Differenz eines vorgegebenen Ständerflussollwertes Psiₛₒₗₗ und des Ständerflussistwertes Psiᵢₛₜ einen Ständerflusskorrekturwert k_{Psi} ab. Ein Drehmomentregler 119 leitet aus der Differenz eines vorgegebenen dynamischen Drehmomentsollwertes M_{s,soll} und des Drehmomentistwertes Mᵢₛₜ eine dynamische Ständersollfrequenz f_{s,soll} ab, die zusammen mit einer statischen Ständersollfrequenz f_{T,soll} die Ständersollfrequenz fₛₒₗₗ ergibt. Die Ständersollfrequenz f_{T,soll} wird über eine Vorsteuerung 120 aus dem Drehmomentsollwert M_{s,soll} und durch Ueberlagerung der Drehzahl n_{Welle} gewonnen. Ein erster Berechnungsblock 121 berechnet aus den Eingangsgrössen k_{Psi} und fₛₒₗₗ die Aenderung ΔPsi des Ständerflussvektors, ein zweiter Berechnungsblock 122 berechnet daraus den Spannungsvektor u der Motorspannung, eine nachfolgende Pulsbreitensteuerung 123 leitet daraus die erforderlichen Schaltbefehle S_{R,S,T} für den Wechselrichter 108 ab. In anderen Drehzahlbereichen erfolgt die Ableitung der Grössen auf andere Weise, z.B. nach dem Verfahren der Direkten Selbstregelung DSR (siehe dazu ebenfalls die o.g. Druckschrift).

Der beschriebene obere Regelkreis in Fig. 1 bildet einen inneren Regelkreis, der eine hochdynamische Regelung des Drehmoments des oder der Fahrmotoren ermöglicht. Diesem überlagert wird ein zweiter unterer Regelkreis, der eine Adhäsionsregelung 102 enthält. Die Adhäsionsregelung 102 soll den Antrieb bei sich ändernden Reibungsverhältnissen zwischen Rad 115 und Schiene 116 stabilisieren und bei Bedarf das Kraftschlussmaximum auszunutzen versuchen. Sie enthält dazu eine Zugkraft- und Schlupfregelung sowie eine Einrichtung zum Suchen des Kraftschlussmaximums. Schnittstelle zwischen beiden Regelkreisen ist der dynamische Drehmomentsollwert M_{s,soll} und die gemessene Drehzahl n_{Welle} der Motorwelle bzw. des Läufers des Fahrmotors. Der dynamische Drehmomentsollwert M_{s,soll} kann sich dabei zusammensetzen aus dem vom Adhäsionsregler 102 abgegebenen statischen Drehmomentsollwert M_{T,soll} und einem zusätzlichen Drehmomentkorrektursignal M_{s,ud} aus einer Zwischenkreisaufschaltung, die von einer zusätzlichen Zwischenkreis-Antiregelung 101 zur Bedämpfung von Schwingungen im Gleichspannungszwischenkreis 105 aus der Zwischenkreisspannung u_{d} abgeleitet wird.

Der überlagerte zweite Regelkreis mit der Adhäsionsregelung 102 leitet seine Information über den Schleuderzustand aus dem Drehzahlsignal n_{Welle} ab und ist deshalb auf eine gute Drehzahlerfassung angewiesen. Nachteilig ist daher bei der bekannten Reglerstruktur gemäss Fig. 1, dass die Regelung meist bei tiefen Fahrgeschwindigkeiten (kleinen Drehzahlen n_{Welle}) versagt, weil zum einen die Drehzahlinformation in diesem Bereich ungenügend ist (Anzahl Pulse pro Umdrehung) und zum anderen reale Drehzahlgeber 111 Nichtidealitäten (Exzentrizität, Signalrauschen durch Pulstoleranzen etc.) aufweisen. Zur Umgehung dieser Probleme ist in der Praxis ein sehr hoher, unerwünschter Inbetriebsetzungsaufwand nötig.

Weiterhin wird zur Erreichung eines verschleissarmen Betriebs eine aktive Bedämpfung der Antriebsmechanik benötigt, weil das mechanische Feder-Masse-System des Antriebs meist nur sehr schwach gedämpft ist. Wegen der erwähnten Nichtidealitäten im Drehzahlsignal n_{Welle} ist dies häufig nicht oder nur ungenügend machbar.

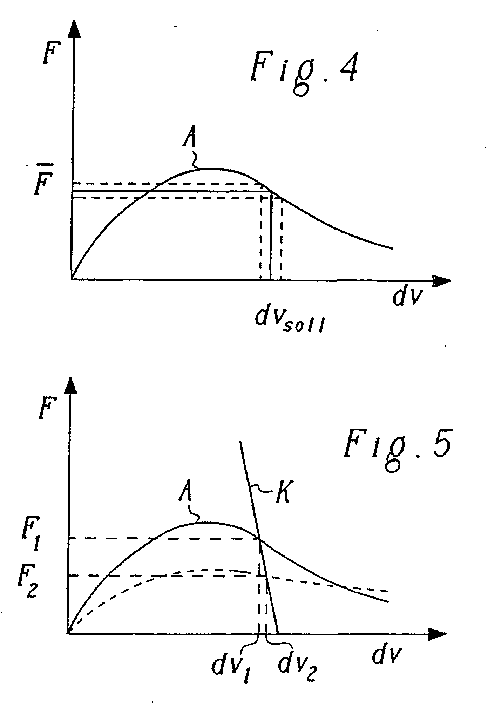

Schliesslich sind Regelungsverfahren mit Drehmomenteinprägung - wie dies aus Fig. 4 deutlich wird - nicht in der Lage, auf dem fallenden Ast der Rad-Schlupfkennlinie bzw. Kraftschlusscharakteristik A (Kraft F über der Differenzgeschwindigkeit Rad-Schiene dv) einen stabilen Arbeitspunkt z.B. bei einer Kraft F' und einer Differenzgeschwindigkeit dvₛₒₗₗ einzustellen, weil der ansteigenden Drehzahl kein höheres Lastmoment mehr entgegengesetzt wird. Eine Stabilisierung mittels Drehzahlregler ist äußerst zeitkritisch und die unvermeidliche Totzeit der Drehzahlmessung regt zu Schwingungen um den Arbeitspunkt an (gestrichelte Linien in Fig. 4).

In der DE-A1-195 30 622 ist ein Verfahren zur Drehmomentregelung einer Drehfeldmaschine, beispielsweise einer Asynchronmaschine, beschrieben, bei dem ein optimaler Schlupf erreicht werden soll. Als Eingangsgröße wird nicht die Drehzahl der Antriebswelle verwendet, sondern die Ständerfrequenz durch Messung zweier aufeinanderfolgender Umschaltpunkte der Ständerspannung der Drehfeldmaschine gemessen. Die Ständerfrequenz dient dabei als Grundlage für eine Ständerfrequenzregelung, damit im Falle eines Schleuderns der Maschine eine Reduzierung des Solldrehmoments erfolgt.

### DARSTELLUNG DER ERFINDUNG

Es ist Aufgabe der Erfindung, eine Regelung für einen Antrieb mit Asynchronmotor anzugeben, bei der ein stabiler und verschleissarmer Betrieb in jedem Arbeitspunkt im Bereich des Kraftschlussmaximums möglich ist, und welche insbesondere möglichst weitgehend ohne Drehzahlgeber auskommt.

Die Aufgabe wird bei einer Regelung der eingangs genannten Art dadurch gelöst, dass die Motorregelung als Ständerfrequenzregelung ausgebildet ist, dass innerhalb der Motorregelung für den Asynchronmotor ein Drehmomentistwert abgeleitet wird, und dass die beiden Regelkreise dadurch miteinander verbunden sind, dass der Drehmomentistwert aus der Motorregelung als Istwert für die Adhäsionsregelung verwendet wird, und dass die Adhäsionsregelung einen Ständerfrequenzsollwert für die Motorregelung vorgibt.

Kern der Erfindung ist eine neue Aufteilung der Kopplung zwischen Motorregelung und Adhäsionsregelung, die mit einer Vorgabe der Ständerfrequenz (Ständersollfrequenz) verbunden ist. Dies hat den folgenden Vorteil: Während des Betriebes ist das Lastmoment, welches vom Reibungsprozess generiert wird und auf die Räder wirkt, mit stochastischen Anregungen versehen. Der Vorteil des Asynchronmotors liegt in seiner steilen Drehzahl-Drehmoment-Charakteristik (Kennlinie K in der zu Fig. 4 vergleichbaren Fig. 5), welche bei sich stark ändernden Lastmomenten (F₁ -> F₂) nur kleine Drehzahländerungen (dv₁ -> dv₂) zulässt. Durch die erfindungsgemässe Vorgabe der Ständerfrequenz wird diese Charakteristik ausgenutzt und das unkontrollierte Beschleunigen des Radsatzes ist nicht mehr möglich. Im dynamischen Fall sind die Drehzahlschwankungen erheblich geringer und stationär ergibt sich ein natürlicher Arbeitspunkt zwischen Motorkennlinie K und Kraftschlusskennlinie A. Damit ist die Voraussetzung geschaffen, dass der überlagerte Adhäsionsregler den Rad-Schiene-Arbeitspunkt einschränkungsfrei einstellen und optimieren kann.

Eine bevorzugte Ausführungsform der erfindungsgemässen Regelung zeichnet sich dadurch aus, dass innerhalb der Motorregelung ein Motorbeobachter vorgesehen ist, welcher anhand von Modellen den Drehmomentistwert aus mehreren Eingangsgrössen berechnet, dass der Asynchronmotor seine mechanische Leistung an einer Motorwelle mit einer Drehzahl abgibt, dass der Asynchronmotor von einem steuerbaren Wechselrichter mit entsprechenden Phasenströmen versorgt wird, dass der Wechselrichter eingangsseitig an einen Gleichspannungszwischenkreis mit der Zwischenkreisspannung angeschlossen ist, und dass der Motorbeobachter die Drehzahl, die Phasenströme und die Zwischenkreisspannung als Eingangsgrössen für die Berechnung des Drehmomentistwerts nimmt.

Moderne Drehgestellantriebe sind aufgrund ihrer Konstruktion sehr schwach gedämpft. Mechanische Schwingungen des Rotors treten immer auch als Schwingungen im Maschinenmoment auf. Bei modernen Motorregelungen berechnen die Motorbeobachter dieses Moment mit guter Auflösung und Dynamik aus den rein elektrischen Grössen Strom und Spannung. Die Aufschaltung zur Bedämpfung der Mechanik kann daher bei dieser Ausführungsform aus dem schon vorhandenen Drehmomentsignal hergeleitet werden und ermöglicht eine aktive Bedämpfung von mechanischen Torsionsschwingungen ohne Auswertung des Drehzahlsignals.

Eine bevorzugte Weiterbildung dieser Ausführungsform ist dadurch gekennzeichnet, dass innerhalb des zweiten Regelkreises eine mechanische Antiregelung zur Dämpfung von Schwingungen des mechanischen Antriebsstranges vorgesehen ist, dass die mechanische Antiregelung als Eingangsgrösse den Drehmomentistwert hat, dass die mechanische Antiregelung am Ausgang ein Frequenzkorrektursignal aus mechanischer Bedämpfung abgibt, dass die Adhäsionsregelung am Ausgang einen Ständerfrequenzsollwert abgibt, und dass der an die Motorregelung abgegebene Ständerfrequenzsollwert sich aus der Ueberlagerung des Ständerfrequenzsollwerts und des Frequenzkorrektursignal aus mechanischer Bedämpfung, und ggf. eines Frequenzkorrektursignals aus einer Zwischenkreisaufschaltung ergibt.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: die Regelstruktur einer drehmomentbasierten ASM-Antriebsregelung mit Adhäsionskontrolle nach dem Stand der Technik;
- Fig. 2: beispielhafte Einzelheiten des Prozesses 104 aus Fig. 1;
- Fig. 3: Einzelheiten der Motorregelung 103 aus Fig. 1 am Beispiel der Indirekten Selbstregelung (ISR);
- Fig. 4: die Festlegung des Arbeitspunktes auf der Radschlupfkennlinie bzw. Kraftschlusscharakteristik bei einer drehmomentbasierten ASM-Regelung;
- Fig. 5: die Festlegung des Arbeitspunktes auf der Radschlupfkennlinie bzw. Kraftschlusscharakteristik bei einer ständerfrequenzbasierten ASM-Regelung gemäss der Erfindung;
- Fig. 6: die zu Fig. 1 vergleichbare Regelstruktur gemäss einem ersten bevorzugten Ausführungsbeispiel für eine Regelung nach der Erfindung;
- Fig. 7: die zu Fig. 3 vergleichbaren Einzelheiten der Motorregelung aus Fig. 6 am Beispiel der Indirekten Selbstregelung (ISR);
- Fig. 8: Einzelheiten der Motorregelung 103 aus Fig. 1 am Beispiel der Direkten Selbstregelung (DSR) im Feldschwächbereich (hohe Drehzahlen);
- Fig. 9: der zu Fig. 8 vergleichbare Aufbau für eine ständerfrequenzbasierte Motorregelung gemäss Fig. 6;
- Fig. 10: Einzelheiten der Motorregelung 103 aus Fig. 1 am Beispiel der Direkten Selbstregelung (DSR) bei mittleren Drehzahlen;
- Fig. 11: der zu Fig. 10 vergleichbare Aufbau für eine ständerfrequenzbasierte Motorregelung gemäss Fig. 6.

### WEGE ZUR AUSFÜHRUNG DER ERFINDUNG

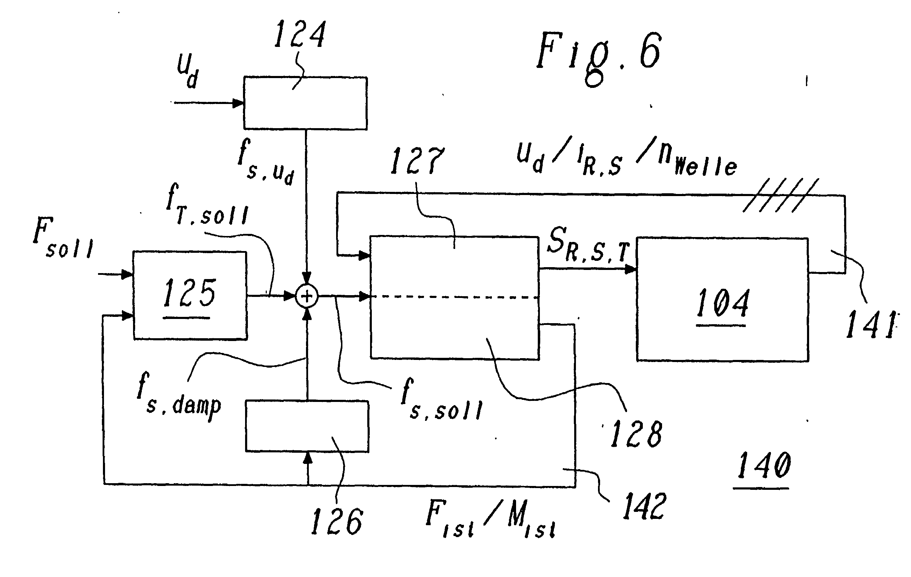

in Fig. 6 ist ein bevorzugtes Ausführungsbeispiel für eine Regelung nach der Erfindung in Form einer zu Fig. 1 vergleichbaren schematisierten Regelstruktur wiedergegeben. Die Regelung 140 besteht wiederum aus zwei Regelkreisen 141 und 142. Der Regelkreis 141 umfasst den Prozessblock 104 und den Block der eigentlichen Motorregelung, die sich aus einer Ständerfrequenzregelung 127 und einem Motorbeobachter 128 zusammensetzt. Der Regelkreis 142 ist für die Regelung der Adhäsion zuständig und umfasst eine Adhäsionsregelung 125, eine Zwischenkreis-Antiregelung 124 und eine mechanische Antiregelung 126. An der Schnittstelle zwischen Motor- und Adhäsionsregelung werden gemäss der Erfindung als Signale der dynamische Ständerfrequenzsollwert f_{s,soll} und der (vom Motorbeobachter 128 berechnete) Drehmomentsollwert Mᵢₛₜ ausgetauscht. Der Prozessblock 104 umfasst die Regelstrecke mit Wechselrichter, Fahrmotor (ASM), Antriebsmechanik und Rad-Schiene-Kontakt. Angesteuert wird er von den Schaltbefehlen S_{R,S,T} der Motorregelung. Ausgangssignale des Prozesses 104 sind die bekannten Grössen zur Beherrschung des Motorregelungsprozesses, nämlich die Phasenströme i_{R,S}, die Zwischenkreisspannung u_{d} und die Drehzahl der Motorwelle n_{Welle}. Der Motorbeobachter 128 schätzt die nicht messbaren Maschinenzustände wie Drehmomentistwert Mᵢₛₜ und Ständerflussistwert Psiᵢₛₜ. Der Motorbeobachter 128 hat damit dieselbe Aufgabe und denselben Aufbau wie bei eingangs erwähnten drehmomentbasierten Regelverfahren.

Wie bereits erwähnt, stellt die Ständerfrequenzregelung 127 zusammen mit dem Motorbeobachter 128 die Motorregelung dar. Die Ständerfrequenzregelung 127 beinhaltet die hochdynamische Regelung der Ständerfrequenz, der Magnetisierung (des Ständerfluss) und der Begrenzung des Maschinendrehmoments. Im Block verbergen sich die verschiedenen Regelalgorithmen für den Spannungsstellbereich und die Feldschwächung, die weiter unten am Beispiel noch näher erläutert werden sollen, sowie die Umschaltung zwischen den Verfahren. Als Ausgabe liefert die Ständerfrequenzregelung die Schaltbefehle S_{R,S,T} für den Wechselrichter.

Die mechanische Antiregelung 126 ist für die aktive Bedämpfung der Torsionsschwingungen im Antriebsstrang vorgesehen. Die Resonanzfrequenzen in der Torsionsmechanik werden bei Vorgabe der Ständerfrequenz aus dem Drehmomentsignal (Eingangsgrösse: Drehmomentistwert Mᵢₛₜ) herausgefiltert. Die mechanische Antiregelung leitet daraus ein Frequenzkorrektursignal f_{s,damp} ab und schaltet dieses auf den Ständerfrequenzsollwert f_{T,soll} der Adhäsionsregelung 125 auf. Der daraus resultierende dynamische Ständerfrequenzsollwert f_{s,soll} bewirkt dann eine aktive Bedämpfung der Torsionsschwingungen. Die Zwischenkreis-Antiregelung 124 leitet aus dem Signal der Zwischenkreisspannung u_{d} ein Frequenzkorrektursignal f_{s,ud} ab und schaltet dieses Korrektursignal ebenfalls auf den Ständerfrequenzsollwert auf. Hierdurch werden Schwingungen in der Zwischenkreisspannung aktiv bedämpft. Eine solche Bedämpfung ist insbesondere bei DC-Fahrzeugen wichtig.

Die beschriebenen Regelblöcke 124 bis 128 sorgen dafür, dass ein von der Traktionsregelung vorgegebener Arbeitspunkt mit einem entsprechenden Zugkraftsollwert Fₛₒₗₗ stabil gefahren werden kann. Insbesondere werden Schleudervorgänge durch die grosse Steilheit der Antriebscharakteristik des unterlagerten Systems (Asynchronmotor mit Ständerfrequenzregelung) verhindert. Dadurch ist es möglich, dass die überlagerte Traktionsregelung den Ständerfrequenzsollwert f_{T,soll} nicht mehr hochdynamisch beeinflussen muss und sich vielmehr auf das Einstellen des optimalen Arbeitspunktes konzentrieren kann.

Die so beschriebene Traktionsregelung hat somit zwei Hauptaufgaben: Bei tiefen Zugkraftanforderungen des Lokführers arbeitet sie als Zugkraftregelung, indem sie die Ständerfrequenz der Fahrzeuggeschwindigkeit nachführt. Kann die Zugkraftvorgabe Fₛₒₗₗ bei ungenügendem Kraftschluss nicht mehr erreicht werden, wird ein Suchalgorithmus aktiviert. Dieser versucht, durch Variation des Arbeitspunktes einen optimalen Kraftschluss zu erreichen und Konditionierungseffekte der Rad-Schiene-Paarung auszunutzen. Hier kann auf bewährte Verfahren zurückgegriffen werden, wie sie z.B. aus der Druckschrift Elektrische Bahnen, 91(1993), Heft 5, S.163 ff., bekannt sind. Um das Kraftschluss-Maximum zu suchen, kann z.B. die Ständerfrequenz variiert und anhand der Reaktion des Drehmoments die Suchrichtung eingestellt werden.

Die Ständerfrequenzregelung 127 aus Fig. 6 hat zur Aufgabe, die Bahngeschwindigkeit und den Betrag des Ständerflussvektors (Ständerflussraumzeigers) Psi zu regeln. Grundsätzlich kann dazu jedes Drehmomentregelverfahren auf eine Ständerfrequenzregelung umgebaut werden. Es muss dabei jedoch zwischen synchronen und asynchronen Pulsungsverfahren für den Wechselrichter unterschieden werden. Bei den synchronen Verfahren beträgt die Schaltfrequenz ein Vielfaches der Ständerfrequenz. Die asynchronen Verfahren zeichnen sich dagegen meist durch eine unabhängige Regelung von Ständerfluss und Drehmoment aus. Die Betrags- oder Trajektorienregelung des Ständerflussraumzeigers muss auch bei der Ständerfrequenzregelung beibehalten werden. Diese führt den Zeiger auf der vorgesehenen Bahnkurve im ständerfesten Koordinatensystem (Kreis, Sechseck, 18-Eck etc.) und sorgt für einen stabilen Arbeitspunkt.

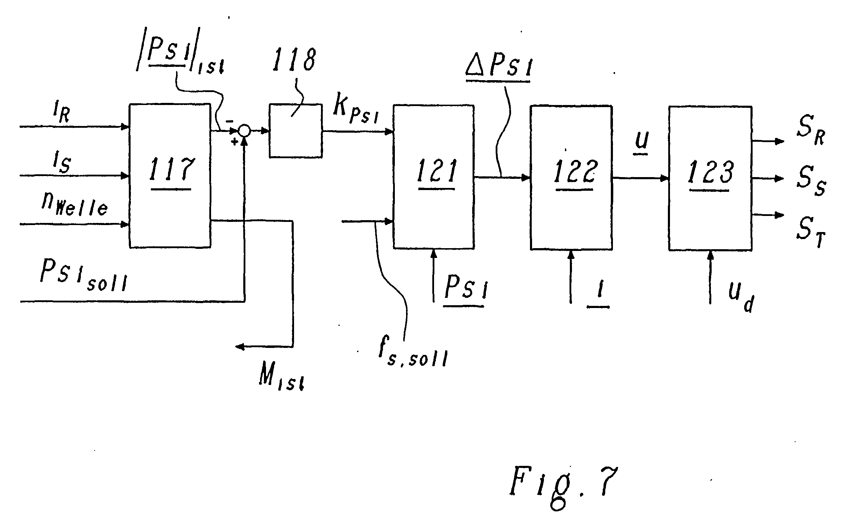

Bei Ständerflussregelung mit kreisförmiger Bahnkurve wird bei der drehmomentbasierten Regelung (Fig. 3) die Winkelgeschwindigkeit vom Drehmomentregler 119 vorgegeben. Für die Umstellung auf Ständerfrequenzregelung gemäss Fig. 6 wird - wie die Fig. 7 zeigt - der Drehmomentregler eliminiert und der dynamische Ständerfrequenzsollwert f_{s,soll} wird direkt von der Adhäsionsregelung (124, 125, 126 in Fig. 6) vorgegeben.

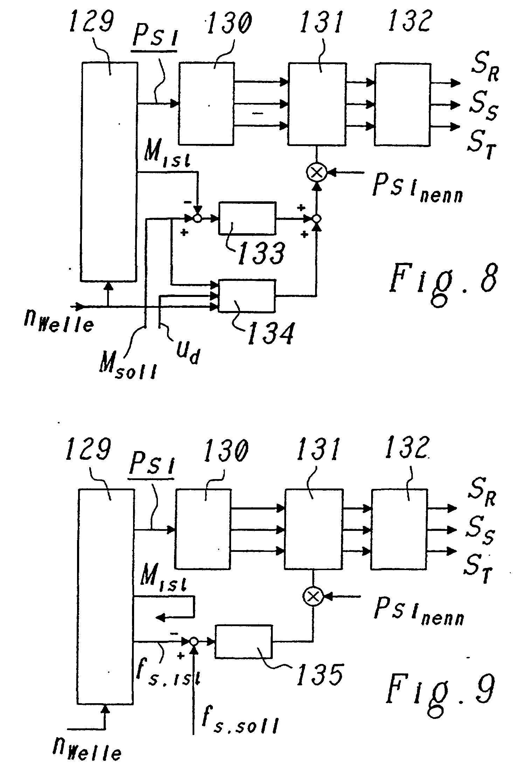

Bei den synchronen Verfahren, bei denen die Schaltfrequenz ein Vielfaches der Ständerfrequenz beträgt, wie dies z.B. bei der Direkten Selbstregelung (DSR) im Feldschwächbereich der Fall ist, ergibt sich ein Uebergang von der drehmomentbasierten zur ständerfrequenzbasierten Regelung gemäss dem Uebergang von der Fig. 8 zur Fig. 9. Bei der drehmomentbasierten Regelung in Fig. 8 berechnet der Motorbeobachter 129 den Ständerflussvektor Psi und den Drehmomentistwert Mᵢₛₜ. Ein Flussrechner 130 errechnet aus dem Ständerflussvektor Psi die Komponenten in einem feststehenden Koordinatensystem, die dann Flusskomparatoren 131 zugeführt und mit einem Flussollwert Psiₛₒₗₗ verglichen werden. Eine Ansteuerschaltung 132 leitet aus den sich ergebenden Komparatorsignalen die erforderlichen Schaltbefehle S_{R,S,T} für den Wechselrichter ab. Der Ständerflussollwert Psiₛₒₗₗ ergibt sich durch Multiplikation eines Ständerflussnennwertes Psiₙₑₙₙ mit einem Flusskorrekturwert, der aus der Ueberlagerung der Ausgangsgrössen eines Drehmomentreglers 133 und einer Vorsteuerung 134 entsteht.

Bei der entsprechenden ständerfrequenzbasierten Regelung der Fig. 9 werden Drehmomentregler und Vorsteuerung durch einen Ständerfrequenzregler 135 ersetzt. Der Ständerfrequenzregler 135 vergleicht den Ständerfrequenzistwert f_{s,ist}, der beim synchronen Taktmuster schon von vornherein bekannt ist, oder einfach vom Taktmuster abgeleitet werden kann, mit dem Ständerfrequenzsollwert f_{s,soll} und bewirkt anstelle des Drehmomentreglers den notwendigen Flusskorrekturwert, der mit dem Ständerflussnennwert Psiₙₑₙₙ multipliziert wird.

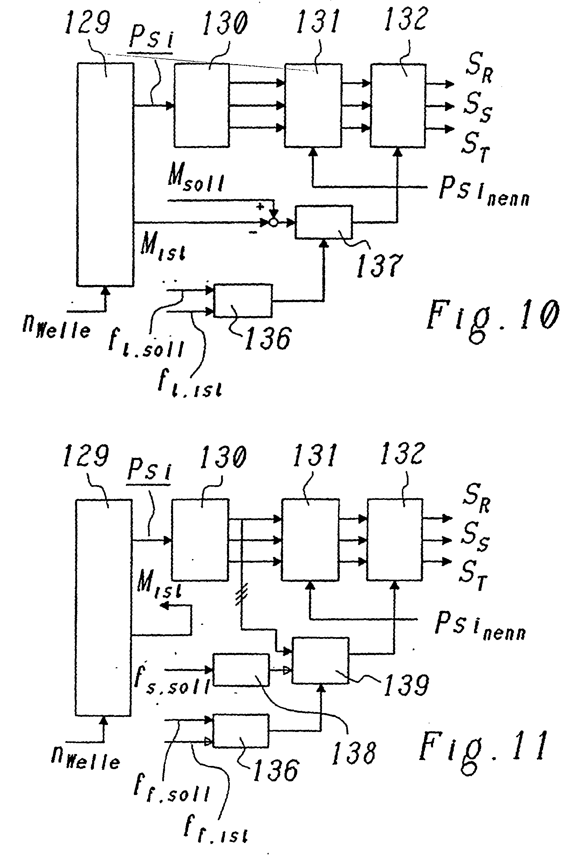

Im Verfahren der Direkten Selbstregelung (DSR) wird bei der drehmomentbasierten Regelung gemäss Fig. 10 mittels eines Zweipunkt-Drehmomentregler 137 entschieden, ob eine drehmomentaufbauende Aussenspannung oder eine drehmomentabbauende Nullspannung vorgegeben wird (Fahrbetrieb). Ein Taktfrequenzregler 136 vergleicht Taktfrequenzsollwert f_{t,soll} und Taktfrequenzistwert f_{t,ist} und stellt danach die Zweipunkt-Hysterese des Drehmomentreglers 137 ein. Bei Ständerflussregelungen mit schaltfrequenzoptimierten Bahnkurven (z.B. Sechseck) muss die Bahngeschwindigkeit des Flussraumzeigers geregelt werden, damit sich im stationären ständerfrequenzgeregelten Arbeitspunkt der gleiche Drehmomentverlauf einstellt wie bei der Drehmomentregelung. Bei Uebergang auf die ständerfrequenzbasierte Regelung gemäss Fig. 11 wird daher ein Zweipunkt-Flussregler 139 verwendet, der die Bahngeschwindigkeit entlang einer Sollwertfunktion führt, welche durch einen Sollwertgeber 138 innerhalb jedes Sektors vorgegeben wird. Der Sollwertgeber 138 berücksichtigt die angelegte Flussbahnkurve (Sechseck, 18-Eck etc.) und die Lastabhängigkeit (Verzerrungsfluss). Die mittlere Bahngeschwindigkeit, welche sich aus den zwei Wechselrichterzuständen Null- und Aussenspannung ergibt, wird innerhalb eines Toleranzbandes dem gewünschten Sollwert nachgeführt. Die Breite des Toleranzbandes (Zweipunkt-Hysterese) wird wiederum durch den Taktfrequenzregler 136 vorgegeben.

Insgesamt ergibt sich mit der Regelung nach der Erfindung
- ein verbessertes dynamisches Verhalten (d.h. mehr Zugkraft, besser gedämpfte mechanische Schwingungen in der Antriebsmechanik, kleinere Regelzeit); und
- eine vereinfachte Inbetriebnahme (weniger Parameter, konzeptionell und physikalisch besserer Lösungsansatz mit Ständerfrequenzvorgabe).

### BEZEICHNUNGSLISTE

- 100: Regelung (drehmomentbasiert)
- 101,124: Zwischenkreis-Antiregelung
- 102,125: Adhäsionsregelung
- 103: Motorregelung
- 104: Prozess
- 105: Gleichspannungszwischenkreis
- 106: Spannungsgeber (Zwischenkreisspannung)
- 107: Zwischenkreiskondensator
- 108: Wechselrichter
- 109,110: Stromgeber (Phasenstrom)
- 111: Drehzahlgeber (Motorwelle)
- 112: Motorwelle (ASM)
- 113: Asynchronmotor (ASM)
- 114: Getriebe
- 115: Rad
- 116: Schiene
- 117,128: Motorbeobachter
- 118: Flussregler
- 119: Drehmomentregler
- 120: Vorsteuerung
- 121: Berechnungsblock (Flussänderung)
- 122: Berechnungsblock (Ständerspannung)
- 123: Pulsbreitensteuerung
- 126: mechanische Antiregelung
- 127: Ständerfrequenzregelung
- 129: Motorbeobachter
- 130: Flussrechner
- 131: Flusskomparatoren
- 132: Ansteuerschaltung (Wechselrichter)
- 133: Drehmomentregler
- 134: Vorsteuerung
- 135: Ständerfrequenzregler
- 136: Taktfrequenzregler
- 137: Drehmomentregler
- 138: Sollwertgeber
- 139: Flussregler
- 140: Regelung (ständerfrequenzbasiert)
- 141: Regelkreis (Motorregelung)
- 142: Regelkreis (Adhäsionsregelung)
- A: Kraftschlusscharakteristik
- dv: Differenzgeschwindigkeit Rad-Schiene
- dvₛₒₗₗ: Soll-Differenzgeschwindigkeit Rad-Schiene
- F,F₁,F₂: Zugkraft
- f_{s,ist}: Ständerfrequenzistwert
- f_{s,soll}: Ständerfrequenzsollwert (dynamisch)
- f_{s,damp}: Frequenzkorrektursignal aus mechanischer Bedämpfung
- f_{s,ud}: Frequenzkorrektursignal aus Zwischenkreisaufschaltung
- f_{T,soll}: Ständerfrequenzsollwert aus der Adhäsionsregelung
- f_{t,ist}: Taktfrequenzistwert
- f_{t,soll}: Taktfrequenzsollwert
- Fᵢₛₜ: Zugkraftistwert
- Fₛₒₗₗ: Zugkraftsollwert
- i: Ständerstromvektor
- i_{R,S}: Phasenstrom (Asynchronmotor)
- K: ASM-Kennlinie (stationär)
- k_{Psi}: Ständerflusskorrekturwert
- Mᵢₛₜ: Drehmomentistwert (Motorbeobachter)
- M_{s,soll}: Drehmomentsollwert (dynamisch/Motorregelung)
- M_{T,soll}: Drehmomentsollwert (statisch/Adhäsionsregelung)
- M_{s,ud}: Drehmomentkorrektursignal (Zwischenkreisaufschaltung)
- n_{Welle}: Drehzahl (Motorwelle)
- Psi: Ständerflussvektor
- Psiᵢₛₜ: Ständerflussistwert (Motorbeobachter)
- Psiₙₑₙₙ: Ständerflussnennwert
- Psiₛₒₗₗ: Ständerflussollwert
- ΔPsi: Aenderung (Ständerflussvektor)
- S_{R,S,T}: Schaltbefehl (Wechselrichter)
- u_{d}: Zwischenkreisspannung

## Patentansprüche

1. Regelung (140) für einen Antrieb mit einem Asynchronmotor (113), insbesondere für ein Schienenfahrzeug,
- mit einem ersten Regelkreis (141, 127, 128) für die Motorregelung, und
- mit einem mit dem ersten Regelkreis (141, 127, 128) verbundenen zweiten Regelkreis (142, 124, 125, 126) zur Regelung der Adhäsion,
- wobei der erste Regelkreis (141, 127, 128) einen Motorbeobachter (128, 129) umfasst, der anhand von Modellen aus mehreren Eingangsgrößen (u_{d}, i_{R}, iₛ, n_{welle}) einen Drehmomentistwert (Mᵢₛₜ) sowie einen Ständerflussistwert (Psiᵢₛₜ) berechnen, und
- wobei dem zweiten Regelkreis (142, 124, 125, 126) der Drehmomentistwert (Mᵢₛₜ) zugeführt wird,
**dadurch gekennzeichnet,**
- **dass** der zweite Regelkreis (142, 124, 125, 126) eine mechanische Antiregelung (142, 126) und eine Adhäsionsregelung (142, 125) aufweist,
- wobei die mechanische Antiregelung (126) zur Dämpfung von Schwingungen des mechanischen Antriebsstranges, aus der Eingangsgröße Drehmomentistwert (Mᵢₛₜ) ein Frequenzkorrektursignal (f_{s,damp}) herleitet und am Ausgang ausgibt,
- wobei die Adhäsionsregelung aus einer Zugkraftvorgabe (Fₛₒₗₗ) und einer aus dem zugeführten Drehmomentistwert (Mᵢₛₜ) ermittelten Ist-Zugkraft (Fᵢₛₜ) zur Zugkraftregelung einen statischen Ständerfrequenzsollwert (f_{T, soll}) ermittelt,
- **dass** der zweite Regelkreis (142, 124, 125, 126) durch Überlagerung des statischen Ständerfrequenzsollwerts (f_{T, soll}) und des Frequenzkorrektursignals (f_{s, damp}) einen dynamischen Ständerfrequenzsollwert (f_{s,soll}) ermittelt und an den ersten Regelkreis (141, 127, 128) ausgibt, und
- **dass** der erste Regelkreis (141, 127, 128) eine Ständerfrequenzregelung (127) aufweist,
- wobei die Ständerfrequenzregelung (127) eine Bahngeschwindigkeit und einen Betrag des Ständerflussvektors Psi, somit einen Ständerflussraumzeiger durch Ausgabe entsprechender Schaltbefehle (S_{R,S,T}) an einen Wechselrichter (108) regelt und dabei den Ständerflussraumzeiger auf einer vorgesehenen Bahnkurve in einem ständerfesten Koordinatensystem führt und damit für einen stabilen Arbeitspunkt sorgt.

2. Regelung nach Anspruch 1, wobei
der Asynchronmotor (113) seine mechanische Leistung an eine Motorwelle (112) mit einer Drehzahl (n_{Welle}) abgibt,
der Wechselrichter (108) eingangsseitig an einem Gleichspannungszwischenkreis (105) mit einer Zwischenkreisspannung (u_{d}) angeschlossen ist und der Motorbeobachter (128) die Drehzahl (n_{Welle}), die Phasenströme (i_{R}, i_{S}) und die Zwischenkreisspannung (u_{d}) als erfasste Eingangsgrössen für die Berechnung des Drehmomentistwerts (Mᵢₛₜ) verwendet.

3. Regelung nach Anspruch 1 oder 2, wobei
der zweite Regelkreis (142, 124, 125, 126) weiterhin
eine Zwischenkreis-Antiregelung (124) zur Dämpfung von Schwingungen in dem Gleichspannungszwischenkreis (105), die als Eingangsgrösse eine bzw. die Zwischenkreisspannung (u_{d}) hat und daraus ein Frequenzkorrektursignal (f_{s,ud}) aus der Zwischenkreisaufschaltung ableitet und abgibt, und
eine Adhäsionsregelung (125), die aus der Zugkraftvorgabe (Fₛₒₗₗ) und der aus dem zugeführten Drehmomentistwert (Mist) ermittelten Ist-Zugkraft (Fᵢₛₜ) den statischen Ständerfrequenzsollwert (f_{T,soll}) ermittelt und abgibt,
aufweist, wobei der an den ersten Regelkreis (141, 127, 128) abgegebene dynamische Ständerfrequenzsollwert (f_{s,soll}) sich aus einer Überlagerung des Ständerfrequenzsollwerts (f_{T,soll}), des Frequenzkorerktursignals (f_{s,damp}) aus mechanischer Bedämpfung und des Frequenzkorrektursignals (f_{s,ud}) aus der Zwischenkreisaufschaltung ergibt.

4. Regelung nach einem der vorangehenden Ansprüche, wobei
die Motorregelung als modifizierte Verfahren der direkten Selbstregelung (DSR) im mittleren Drehzahlbereich und im Feldschwächbereich und der indirekten Selbstregelung (ISR) im Anfahrbereich ausgelegt ist.

## Claims

1. A control system (140) for a drive with an asynchronous motor (113), in particular for a railway car,
- with a first control loop (141, 127, 128) for motor control, and
- with a second control loop (142, 124, 125, 126) for regulating adhesion connected to the first control loop (141, 127, 128),
- whereby the first control loop (141, 127, 128) comprises a motor observer (128, 129), which calculate by means of models a torque actual value (Mᵢₛₜ) and a standard flow actual value (psiᵢₛₜ) from several input variables (U_{d}, i_{R}, i_{S}, n_{welle}), and
- whereby the torque actual value (Mᵢₛₜ) is supplied to the second control loop (142, 124, 125, 126),
**characterised in that**
- the second control loop (142, 124, 125, 126) has a mechanical anti-control (142, 126) and an adhesion control (142, 125),
- whereby the mechanical anti-control (126) for damping vibrations of the mechanical drive train derives a frequency correction signal (f_{s, damp}) from the torque actual value (Mᵢₛₜ) as input variable and emits it at the output,
- whereby the adhesion control calculates for tensile force control a static stator frequency set value (f_{T,soll}) from a tensile force preset (Fₛₒₗₗ) and from an actual tensile force (Fᵢₛₜ) calculated from the supplied torque actual value (Mᵢₛₜ),
- the second control loop (142, 124, 125, 126) calculates a dynamic stator frequency set value (f_{s, soll}) by superposing the static stator frequency set value (f_{T, soll}) and the frequency correction signal (f_{s, damp}) and sends it to the first control loop (141, 127, 128), and
- the first control loop (141, 127, 128) has a stator frequency control (127),
- whereby the stator frequency control (127) controls a path speed and an absolute value of the standard flow vector Psi, thus a stator flow space indicator by outputting corresponding switch commands (S_{R,S,T}) to an inverse rectifier (108) and at the same time guides the stator flow space indicator on a supplied path curve in a stator-fixed coordination system and thus provides a stable work point.

2. The control system as claimed in Claim 1, whereby the asynchronous motor (113) supplies its mechanical power to a motor shaft (112) at a speed (n_{welle}), the inverse rectifier (108) is connected on the input side to a direct-voltage intermediate circuit (105) with an intermediate voltage (u_{d}) and the motor observer (128) utilises the speed (n_{welle}), the phase currents (i_{R}, i_{S}) and the intermediate circuit voltage (u_{d}) as detected input variables for calculating the torque actual value (Mᵢₛₜ).

3. The control system as claimed in Claim 1 or 2, whereby the second control loop (142, 124, 125, 126) also has an intermediate circuit anti-control (124) for damping vibrations in the direct-voltage intermediate circuit (105), which has a or the intermediate circuit voltage (u_{d}) as input variables and derives and outputs therefrom a frequency correction signal (f_{s, ud}) from the intermediate circuit lock-on, and has an adhesion control (125), which calculates and sends the static stator frequency set value (f_{T, soll}) from the tensile force preset (Fₛₒₗₗ) and the actual tensile force (Fᵢₛₜ) determined from the supplied torque actual value (Mᵢₛₜ), whereby the dynamic stator frequency set value (f_{s, soll}) sent to the first control loop (141, 127, 128) results from superposing the stator frequency set value (f_{T, soll}), the frequency correction signal (f_{s, damp}) from mechanical damping and of the frequency correction signal (f_{s, ud}) from the intermediate circuit lock-on.

4. The control system as claimed in any one of the preceding claims, whereby the motor control is configured as a modified process of direct self-control (DSR) in the middle speed range and in the field weakening range and the indirect self-control (ISR) in the start-up range.

## Revendications

1. Dispositif de régulation (140) pour un mécanisme d'entraînement à moteur asynchrone (113), en particulier pour un véhicule ferroviaire,
- comportant un premier circuit de régulation (141, 127, 128) pour la régulation du moteur, et
- comportant un deuxième circuit de régulation (142, 124, 125, 126) relié au premier circuit de régulation (141, 127, 128) pour la régulation de l'adhérence,
- le premier circuit de régulation (141, 127, 128) comprenant un observateur du moteur (128, 129) qui, à l'aide de modèles à partir de plusieurs grandeurs d'entrée (U_{d}, i_{R}, i_{S}, D_{welle}) calcule une valeur réelle de couple de rotation (Mᵢₛₜ₎ et une valeur réelle du flux du stator (PSiᵢₛₜ), et
- au deuxième circuit de régulation (142, 124, 125, 126) étant amenée la valeur réelle du couple de rotation (Mᵢₛₜ),
**caractérisé**
- **en ce que** le deuxième circuit de régulation (142, 124, 125, 126) comporte un dispositif mécanique d'anti-régulation (142, 126) et un dispositif de régulation de l'adhérence (142, 125),
- le dispositif mécanique d'anti-régulation (126) dérivant de la grandeur d'entrée, à savoir la valeur réelle du couple de rotation (Mᵢₛₜ), un signal de correction de fréquence (f_{s,damp}) et le délivrant à la sortie pour amortir les oscillations de la ligne d'entraînement mécanique,
- le dispositif de régulation de l'adhérence déterminant, d'une force de traction prédéfinie (Fₛₒₗₗ) et d'une force de traction réelle (Fᵢₛₜ) déterminée à partir de la valeur réelle du couple de rotation (Mᵢₛₜ) amenée, une valeur de consigne statique de la fréquence du stator (f_{T,soll}) pour la régulation de la force de traction,
- **en ce que** le deuxième circuit de régulation (142, 124, 125, 126) déterminant, par superposition de la valeur de consigne statique de la fréquence du stator (f_{T,soll}) et du signal de correction de la fréquence (f_{S, damp}), une valeur de consigne dynamique de la fréquence du stator (f_{S,soll}) et la délivrant au premier circuit de régulation (141, 127, 128), et
- **en ce que** le premier circuit de régulation (141, 127, 128) comporte un dispositif de régulation de la fréquence du stator (127),
- le dispositif de régulation de la fréquence du stator (127) régulant une vitesse de voie et une valeur absolue du vecteur de flux du stator Psi, ainsi régulant un indicateur spatial du flux du stator par sortie d'instructions de commande (S_{R, S, T}) correspondantes à un onduleur (108), et guidant l'indicateur spatial de flux du stator sur une portion de trajectoire prévue, dans un système de coordonnées solidaire du stator, et assurant donc un point de travail stable.

2. Dispositif de régulation selon la revendication 1, dans lequel
le moteur asynchrone (113) délivre sa puissance mécanique à un arbre du moteur (112) avec une vitesse de rotation (n_{Welle}), l'onduleur (108) est raccordé côté entrée à un circuit intermédiaire à tension continue (105) avec une tension de circuit intermédiaire (U_{d}), et l'observateur du moteur (128) utilise la vitesse de rotation (n_{Welle}), les courants de phase (i_{R} , iₛ) et la tension du circuit intermédiaire (U_{d}) comme grandeurs d'entrée enregistrées pour le calcul de la valeur réelle du couple de rotation (Mᵢₛₜ).

3. Dispositif de régulation selon la revendication 1 ou 2, dans lequel
le deuxième circuit de régulation (142, 124, 125, 126) comporte en outre un dispositif d'anti-régulation du circuit intermédiaire (124) pour amortir des oscillations dans le circuit intermédiaire à tension continue (105), qui a comme grandeur d'entrée une ou la tension du circuit intermédiaire (U_{d}) et dérive de celle-ci un signal de correction de fréquence (f_{s,ud} ) du circuit intermédiaire et le délivre, ainsi qu'un dispositif de régulation de l'adhérence (125) qui, à partir de la force de traction prédéfinie (Fₛₒₗₗ) et la force de traction réelle (Fᵢₛₜ) déterminée à partir de la valeur réelle du couple de rotation (Mᵢₛₜ) amenée, détermine la valeur de consigne statique de la fréquence du stator (F_{t,soll}) et la délivre, la valeur de consigne dynamique de la fréquence du stator (F_{s,soll}) délivrée au premier circuit de régulation (141, 127, 128) résultant de la superposition de la valeur de consigne de la fréquence du stator (f_{t,soll}), du signal de correction de la fréquence (f_{s,damp}) découlant de l'amortissement mécanique, et du signal de correction de la fréquence (f_{s,ud}) découlant du circuit intermédiaire.

4. Dispositif de régulation selon l'une des revendications précédentes, dans lequel la régulation du moteur est conçue comme procédé modifié de l'autorégulation directe (DSR) dans le domaine de la vitesse de rotation moyenne et dans le domaine de l'affaiblissement de champ ainsi que de l'autorégulation indirecte (ISR) dans le domaine du démarrage.
